(19) Europäisches Patentamt
European Patent Office
Office européen des brevets

(11) EP 1 777 441 A1

(12) EUROPÄISCHE PATENTANMELDUNG

(43) Veröffentlichungstag:
25.04.2007 Patentblatt 2007/17

(51) Int Cl.:
F16H 61/664 (2006.01)        F16H 15/42 (2006.01)

(21) Anmeldenummer: 05109897.8

(22) Anmeldetag: 24.10.2005

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(71) Anmelder: Getrag Ford Transmissions GmbH
50735 Köln (DE)

(72) Erfinder:
• Bungart, Stephan
42855 Remscheid (DE)
• Chazotte, Jean-Pierre
50226 Frechen (DE)
• Kokus, Stefan
53859 Niederkassel (DE)
• Fiekens, Rüdiger
51109 Köln (DE)

(54) **Stufenloses Getriebe und Verfahren zum Steuern desselben**

(57) Die Erfindung betrifft ein Verfahren zum Steuern eines stufenlosen Getriebes (1) mit einem Eingangsrad (2), mit einem Ausgangsrad (3) und mit einem Übertragungsglied (8), das sowohl mit dem Eingangsrad (2) als auch mit dem Ausgangsrad (3) kraftschlüssig in Eingriff steht, wobei eine Übersetzungsverstellung des Getriebes (1) durch eine stufenlose Änderung eines Radius eines Kraftangriffspunktes zwischen Eingangsrad (2) und Übertragungsglied (8) und/oder durch eine stufenlose Änderung eines Radius eines Kraftangriffspunktes zwischen Ausgangsrad (3) und Übertragungsglied (8) erfolgt, wobei neben den Drehzahlen von Eingangsrad (2) und Ausgangsrad (3) eine Drehzahl oder eine Umlaufgeschwindigkeit des Übertragungsglieds (8) ermittelt wird. Des weiteren betrifft die Erfindung ein stufenloses Getriebe, an dem das erfindungsgemäße Verfahren angewendet werden kann.

Fig. 2

**Beschreibung**

Die Erfindung betrifft ein stufenloses Getriebe sowie ein Verfahren zum Steuern des stufenlosen Getriebes.

Mechanische stufenlose Getriebe werden beispielsweise in Kraftfahrzeugen eingesetzt. Ein stufenloses Getriebe umfasst dabei ein Eingangsrad, ein Ausgangsrad und ein Übertragungsglied. In einem Kraftfahrzeug ist das Eingangsrad über eine Kupplung mit dem Motor des Kraftfahrzeuges verbunden, so dass das Drehmoment von dem Motor auf das Eingangsrad geleitet werden kann. Das Ausgangsrad des stufenlosen Getriebes sitzt drehfest auf einer Abtriebswelle, die üblicherweise über ein Differential mit den angetriebenen Achsen des Kraftfahrzeuges in Verbindung steht.

Das Übertragungsglied steht sowohl mit dem Eingangsrad als auch mit dem Ausgangsrad kraftschlüssig in Eingriff und ermöglicht eine Übertragung des Drehmomentes von dem Eingangsrad auf das Ausgangsrad. Die Übersetzung des stufenlosen Getriebes hängt dabei von einem Radius eines Kraftangriffspunktes zwischen Eingangsrad und Übertragungsglied und von einem Radius eines Kraftangriffspunktes zwischen Ausgangsrad und Übertragungsglied ab. Indem diese Radien stufenlos geändert werden, kann die Übersetzung entsprechend stufenlos verstellt werden.

Ein Beispiel für ein stufenloses Getriebe stellt ein Kegelreibringgetriebe dar. Eingangsrad und Ausgangsrad sind dabei als Kegelreibräder ausgebildet. Diese Kegelreibräder sind zueinander entgegengesetzt auf parallelen Wellen angeordnet. Das Übertragungsglied ist als Reibring ausgebildet, der mit beiden Kegelreibrädern in Eingriff steht und eines der Kegelreibräder umgreift.

Durch Verschieben bzw. Verstellen des Reibringes in axialer Richtung der parallelen Wellen der Kegelreibräder wird die Übersetzung des Kegelringgetriebes verstellt. Durch das axiale Verstellen des Reibringes ändern sich die jeweiligen Radien der Kraftangriffspunkte zwischen den Kegelreibrädern und dem Reibring. Aus den jeweiligen Radien der Kraftangriffspunkte lassen sich die wirksamen Durchmesser der Kegelreibräder ableiten. Dabei soll unter dem wirksamen Durchmesser der Durchmesser des Umfangssegmentes des Kegelreibrads verstanden werden, auf dem der Reibring mit einem gewissen Schlupf abrollt. Somit ergeben sich zwei Reibkontakte oder Reibkontakzonen beim Kegelringgetriebe. Eine Reibkontaktzone bildet sich zwischen Eingangsrad und einer Innenfläche des Reibrings, die andere Reibkontaktzone bildet sich zwischen einer Außenfläche des Reibrings und dem Ausgangsrad aus.

Bei Kenntnis der aktuellen axialen Lage des Reibringes ist es grundsätzlich möglich, über die geometrischen Zusammenhänge des Kegelringgetriebes, insbesondere der wirksamen Kegeldurchmesser sowie des Innendurchmessers und des Außendurchmessers des Reibringes auf das aktuelle Soll-Übersetzungsverhältnis zu schließen. Jedoch wird in der Realität das tatsächliche Ist-Übersetzungsverhältnis durch den auftretenden Schlupf zwischen den Kegelreibrädern und Reibring reduziert.

Das Ist-Übersetzungsverhältnis lässt sich aus den Drehzahlen des Eingangsrads und des Ausgangsrads ermitteln (vgl. Gleichung 1).

$$i_{ges,ist} = \frac{n_E}{n_A} \qquad\qquad (1)$$

mit

$i_{ges,ist}$  Gesamtes Ist-Übersetzungsverhältnis;

$n_E$  Drehzahl des Eingangsrads; und

$n_A$  Drehzahl des Ausgangsrads.

Über die entsprechend der momentanen Lage des Übertragungsgliedes geometrischen Zusammenhänge des stufenloses Getriebes, im folgenden exemplarisch am Beispiel des Kegelringgetriebes dargestellt, kann das Soll-Übersetzungsverhältnis berechnet werden. Dieses Soll-Übersetzungsverhältnis entspricht beim Kegelringgetriebe dem Produkt eines Übersetzungsverhältnisses zwischen Eingangsrad und einem Innendurchmesser des Reibringes und eines Übersetzungsverhältnisses zwischen einem Außendurchmesser des Reibringes und dem Ausgangsrad. Das gesamte Soll-Übersetzungsverhältnis lässt sich mit den Gleichungen 2 bis 4 berechnen. Es sei darauf hingewiesen, dass die Gleichungen 2 bis 4 nur für ein Kegelringgetriebe gelten, bei dem der Reibring das Eingangsrad umgreift bzw. bei dem das Eingangsrad sich innerhalb der vom Reibring aufgespannten kreisförmigen Ringebene befindet. Es ist auch möglich, dass der Reibring das Ausgangsrad umgreift, jedoch wären dann die Gleichungen 2 bis 4 zu modifizieren.

$$i_{ER,soll} = \frac{d_{RI}}{d_E} \qquad (2)$$

mit

$i_{ER,soll}$     Soll-Übersetzungsverhältnis zwischen Eingangsrad und Reibring;

$d_{RI}$     (mittlerer) Innendurchmesser des Reibringes; und

$d_E$     wirksamer Durchmesser des Eingangsrads.

$$i_{RA,soll} = \frac{d_A}{d_{RA}} \qquad (3)$$

mit

$i_{RA,soll}$     Soll-Übersetzungsverhältnis zwischen Reibring und Ausgangsrad;

$d_A$     wirksamer Durchmesser des Ausgangsrads; und

$d_{RA}$     (mittlerer) Außendurchmesser des Reibringes.

$$i_{ges,soll} = i_{ER,soll} \cdot i_{RA,soll} \qquad (4)$$

mit

$i_{ges,soll}$     gesamtes Soll-Übersetzungsverhältnis.

Der Gesamtschlupf lässt sich mit Gleichung 5 ermitteln:

$$s_{ges} = \left( \frac{n_E}{n_A} \cdot \frac{1}{i_{ER,soll} \cdot i_{RA,soll}} - 1 \right) \cdot 100\% \qquad (5)$$

mit

$S_{ges}$     Gesamtschlupf.

Mit Hilfe der obigen Gleichungen und bei Kenntnis der Drehzahlen des Eingangsrads und des Ausgangsrads sowie der aktuellen axialen Position des Reibringes kann unter Berücksichtigung der geometrischen Verhältnisse des Kegelringgetriebes auf den Gesamtschlupf geschlossen werden. Jedoch ist es nicht möglich, zu unterscheiden, wie sich der ermittelte Gesamtschlupf bezüglich der einzelnen Reibkontakte zusammensetzt. Somit ist eine genaue Schlupfregelung nicht mit ausreichender Genauigkeit möglich, wobei ein Einzelschlupf, entweder bezogen auf den Reibkontakt zwischen Eingangsrad und Innenfläche des Reibrings (kurz: Innenkontakt) oder auf den Reibkontakt zwischen Au βenfläche des Reibrings und Ausgangsrad (Au βenkontakt), ein kritisches Maß nicht überschreiten darf.

So kann beispielsweise der Fall auftreten, dass der Gesamtschlupf sich etwa zu gleichen Teilen auf den Innen- und Außenkontakt des Reibringes aufteilt, wobei sowohl der Einzelschlupf des Innenkontakts als auch der Einzelschlupf des Au βenkontakts sich jeweils in tolerierbaren Grenzen bewegen. Es ist jedoch auch möglich, dass der Gesamtschlupf hauptsächlich oder zu einem großen Anteil auf nur einen Einzelschlupf zurückzuführen ist, wobei dieser Einzelschlupf dann über das kritische Maß hinausgeht, während der Gesamtschlupf, wie im obigen ersten Fall, noch keinen unkritischen Wert annimmt.

Um zu große oder kritische Schlüpfe und damit eine mögliche Zerstörung des Getriebes zu vermeiden, können die Kegelreibräder axial zueinander verschoben werden, um so den dazwischen angeordneten Reibring mit einer größeren axialen Kraft einzuspannen. Sind jedoch die axialen Kräfte unnötig zu hoch, hat dies hinsichtlich der Effizienz des Getriebes wiederum Nachteile: Hohe Einspannkräfte des Reibrings führen zu hohen Übertragungsverlusten und unerwünschten Materialbelastungen.

Der Erfindung liegt daher die Aufgabe zugrunde, ein Verfahren zum Steuern eines stufenlosen Getriebes bereitzustellen, mit dem das stufenlose Getriebe möglichst effizient und sicher betrieben werden kann.

Die der Erfindung zugrunde liegende Aufgabe wird mit dem Verfahren gemäß Anspruch 1 gelöst. Ein erfindungsgemäßes stufenloses Getriebe wird mit den Merkmalen des Anspruches 6 vorgeschlagen. Bevorzugte Ausführungsbeispiele des erfindungsgemäßen Verfahrens sowie des erfindungsgemäßen Getriebes können den jeweiligen Unteransprüchen entnommen werden.

Das erfindungsgemäße Verfahren zeichnet sich dadurch aus, dass neben den Drehzahlen von Eingangsrad und Ausgangsrad auch eine Drehzahl oder eine Umlaufgeschwindigkeit des Übertragungsgliedes ermittelt wird. Sind die Drehzahlen von Eingangsrand, Ausgangsrad und Übertragungsglied bekannt, können der Schlupf zwischen dem Eingangsrad und dem Übertragungsglied und der Schlupf zwischen dem Übertragungsglied und dem Ausgangsrad ermittelt werden.

Am Beispiel eines Kegelringgetriebes werden im Folgenden die Formeln für die Berechnung des Schlupfes zwischen Eingangsrad und Übertragungsglied und des Schlupfes zwischen dem Übertragungsglied und dem Ausgangsrad vorgestellt. Dabei wird auf die oben aufgeführten Formeln Bezug genommen. Während sich der Schlupf zwischen Eingangsrad und Reibring nach Gleichung 6 berechnen lässt, lässt sich der Schlupf zwischen Reibring und Ausgangsrad durch Gleichung 7 berechnen.

$$s_{ER} = \left( \frac{n_E}{n_R} \cdot \frac{1}{i_{ER,soll}} - 1 \right) \cdot 100\% \tag{6}$$

mit

$n_R$     Drehzahl des Reibringes; und

$s_{ER}$     Einzelschlupf zwischen Eingangsrad und Reibring.

$$s_{RA} = \left( \frac{n_R}{n_A} \cdot \frac{1}{i_{RA,soll}} - 1 \right) \cdot 100\% \tag{7}$$

mit

$S_{RA}$     Einzelschlupf zwischen Reibring und Ausgangsrad.

Durch die Erfassung der Drehzahl des Reibringes ist es gemäß der Gleichungen 6, 7 möglich, nicht nur den Gesamtschlupf zu betrachten, sondern die Einzelschlüpfe zu erfassen. Dies bietet den Vorteil, bei der Steuerung des Kegelringgetriebes erforderliche Gegenmaßnahmen schon dann einzuleiten, wenn nur einer der beiden Schlüpfe ein kritisches Maß überschreitet. Ein übermäßiger Verschleiß des Kegelringgetriebes kann somit vermieden werden. Zudem lassen sich durch geeignete Maßnahmen die Reibverbindungen zwischen Eingangsrad und Reibring und Reibring und Ausgangsrad individuell beeinflussen.

Eine bevorzugte Möglichkeit, die Einzelschlüpfe zu beeinflussen, besteht darin, die Anpresskraft zu regeln, die zwischen Eingangsrad und Übertragungsglied bzw. zwischen Übertragungsglied und Ausgangsrad wirkt. Wird beispielsweise bei einem Kegelringgetriebe ein zu großer Einzelschlupf ermittelt, können die beiden Kegelreibräder und der dazwischen liegende Reibring mit einer größeren axialen Kraft verspannt werden. Dabei wird sowohl der Einzelschlupf zwischen Eingangsrad und Reibring als auch der Einzelschlupf zwischen Reibring und Ausgangsrad reduziert.

Vorzugsweise wird eine Zuführung eines Traktionsfluids zu einer Kontaktzone zwischen Eingangsrad und Übertragungsglied und/oder zu einer Kontaktzone zwischen Übertragungsglied und Ausgangsrad geregelt. Ist beispielsweise der Schlupf zwischen Eingangsrad und Übertragungsglied zu groß, so kann die Menge des in die Kontaktzone einzuspritztenden Traktionsfluids angepasst werden.

Vorzugsweise können beim erfindungsgemäßen Verfahren die Kontaktzone zwischen Eingangsrad und Übertragungsglied und die Kontaktzone zwischen Übertragungsglied und Ausgangsrad voneinander unabhängig mit dem Traktionsfluid versorgt werden. Dadurch lässt sich die Kapazität und die Haltbarkeit des stufenlosen Getriebes merklich verbessern, ohne dass unnötig viel Traktionsfluid eingesetzt wird.

Die Möglichkeit, Traktionsfluid in Abhängigkeit von Getriebeparametern, wie Drehzahl, Schlupf, Drehmoment, Anpressung, Temperatur, Fahrsituation etc. gezielt auf eine Kontaktzone zwischen Eingangsrad und Übertragungsglied bzw. zwischen Übertragungsglied und Ausgangsrad zu leiten, kann im Übrigen allgemein bei Getrieben eingesetzt werden, bei denen zwei Komponenten kraftschlüssig in Eingriff stehen und unter Schlupf Drehmoment übertragen. Dabei kann das Traktionsfluid, beispielsweise ein Hochtraktionsschmierstoff, über eine Pumpe unter Druck gesetzt werden und dann über geeignete Zuführwege den entsprechenden Kontaktzonen zugeleitet werden. Dadurch lässt sich über eine geregelte Zuführung des Traktionsfluids bzw. eines Traktionsbegünstigungsmittels der Kraftschluss zwischen zwei Komponenten gezielt beeinflussen.

Das erfindungsgemäße stufenlose Getriebe weist ein Eingangsrad, ein Ausgangsrad und ein Übertragungsglied auf, das sowohl mit dem Eingangsrad als auch mit dem Ausgangsrad kraftschlüssig in Eingriff steht, wobei eine Übersetzungsverstellung durch eine stufenlose Änderung eines Radius eines Kraftangriffspunktes zwischen Eingangsrad und Übertragungsglied und/oder durch eine stufenlose Änderung eines Radius eines Kraftangriffspunktes zwischen Ausgangsrad und Übertragungsglied erfolgt, und wobei eine Drehzahl oder eine Umlaufgeschwindigkeit des Übertragungsgliedes erfasst werden kann. Durch die Erfassbarkeit der Drehzahl oder der Umlaufgeschwindigkeit des Übertragungsgliedes lassen sich, wie oben am Beispiel eines Kegelringgetriebes gezeigt, bei Kenntnis der Drehzahlen des Eingangsrads und des Ausgangsrads die Einzelschlüpfe zwischen Eingangsrad und Übertragungsglied bzw. zwischen Übertragungsglied und Ausgangsrad ermitteln, so dass das oben vorgestellte Verfahren angewendet werden kann.

Das stufenlose Getriebe kann ein Umschlingungsgetriebe oder ein Wälzgetriebe sein. Bei einem Umschlingungsgetriebe kann das Übertragungsglied ein Riemen, ein Band, eine Kette oder dergleichen sein. Das Eingangsrad und das Ausgangsrad können durch jeweils ein Scheibenpaar gebildet sein. Das bandförmige Übertragungsglied ist dabei zwischen den zwei Scheibenpaaren kraftschlüssig eingespannt. Durch Variation der Abrollradien auf den Scheiben lässt sich die Übersetzung des Getriebes stufenlos verstellen.

Auch kann das stufenlose Getriebe ein Wälzgetriebe sein. Ein bevorzugtes Beispiel für ein Wälzgetriebe ist das Kegelringgetriebe, wie es oben beschrieben wurde. Entsprechend sind Eingangsrad und Ausgangsrad als Kegelreibräder ausgebildet, die zueinander entgegengesetzt auf parallelen Wellen angeordnet sind. Das Übertragungsglied ist als Reibring ausgebildet, wobei der Reibring eines der Kegelreibräder umgreift und in axialer Richtung der Wellen verschoben werden kann. Grundsätzlich kann der Reibring das Eingangsrad oder das Ausgangsrad umfassen.

Vorzugsweise ist ein Sensor zur Erfassung der Drehzahl des Reibringes an einem Verstellmechanismus für den Reibring befestigt. Der Verstellmechanismus dient dazu, den Reibring in axialer Richtung der Kegelreibräder zu bewegen, um so die Übersetzung des Getriebes zu verstellen. Durch die Befestigung an dem Verstellmechanismus weist der Sensor bezogen auf den Reibring eine ortsfeste Position ein und vollzieht die gleichen axialen Verstellungen wie der Reibring. Auch wenn der Reibring aus einer Ebene senkrecht zu den Wellen der Kegelreibräder gekippt wird, um dadurch ein axiale Bewegung einzuleiten, sorgt eine geeignete Anbringung des Sensors am Verstellmechanismus für die bevorzugte ortsfeste Lage bezogen auf den Reibring.

In einem bevorzugten Ausführungsbeispiel weist der Reibring wenigstens einen Signalgeber auf, der bei Drehung des Reibringes am Sensor vorbeiläuft. Vorzugsweise weist der Reibring eine Vielzahl von Signalgebern auf. Der Sensor erfasst dabei ein Signal eines Signalgebers und kann anhand der Anzahl der Signale pro Zeiteinheit und der Anzahl der Signalgeber auf die Drehzahl des Reibringes schließen.

Beispielsweise kann der Sensor ein induktiver Tastkopf sein. Dieser Tastkopf erfasst eine Magnetfeldänderung, die durch das Vorbeilaufen beispielsweise eines ferromagnetischen Körpers erzeugt wird und eine elektrische Spannung induziert. In diesem Fall stellt der ferromagnetische Körper den Signalgeber dar. Aber auch Erhebungen, Vertiefungen etc. an dem Reibring können als Signalgeber fungieren.

Auch kann der Sensor, als optischer Drehzahlaufnehmer ausgebildet, eine Leuchtdiode und ein Fototransistor umfassen. Das von der Leuchtdiode ausgesandte Licht beleuchtet den Fototransistor, wenn der Lichtstrahl der Leuchtdiode nicht unterbrochen wird. Weist der Reibring eine Scheibe mit Schlitzen oder dergleichen auf, durch die der Lichtstrahl treten kann, wird bei Drehung der Scheibe der Lichtstrahl für kurze Zeit unterbrochen. Daraus ergeben sich eine Vielzahl von Lichtimpulsen, deren Anzahl ein Maß für die Drehgeschwindigkeit des Reibrings ist.

Der Signalgeber kann als Steg ausgebildet sein, der sich in axialer Richtung des Reibringes erstreckt. Der Sensor ist dabei vorzugsweise mit einer Erfassungsfläche radial zum Reibring ausgerichtet, wobei der sich in axialer Richtung erstreckende Steg an der Erfassungsfläche des Sensors vorbeiläuft.

Alternativ kann der Signalgeber als Tasche ausgebildet sein, die in einer axialen Seitenwand des Reibringes ausgebildet ist. Der Sensor ist dabei mit seiner Erfassungsfläche axial zum Reibring ausgerichtet, so dass die in der axialen Seitenwand des Reibringes ausgebildete Tasche plan an der Erfassungsfläche des Sensors vorbeilaufen kann.

In einem bevorzugten Ausführungsbeispiel ist eine Kraft in axialer Richtung der Kegelreibräder regelbar, mit der der Reibring zwischen den Kegelreibrädern eingespannt ist. Damit besteht die Möglichkeit, last- und situationsabhängig die Anpresskraft zwischen Kegelreibrädern und Reibring zu variieren. So kann die axiale Kraft erhöht werden, wenn das Kegelringgetriebe in einem Betriebszustand betrieben wird, in dem einer oder beide Einzelschlüpfe das jeweils kritische Maß überschreiten.

Vorzugsweise sind die Kegelreibräder zueinander in axialer Richtung verschiebbar. Dies eröffnet die Möglichkeit, beispielsweise über einen Aktuator die Kraft zwischen den Kegelreibrädern in axialer Richtung zu steuern, wodurch die Anpresskräfte zwischen Kegelreibrädern und Reibring gezielt beeinflusst werden können.

Vorzugsweise kann eine Zuführung eines Traktionsfluids zu der Kontaktzone von Eingangsrad und Übertragungsglied und/oder zu der Kontaktzone zwischen Übertragungsglied und Ausgangsrad geregelt werden. Wird beispielsweise festgestellt, dass der Schlupf zwischen Eingangsrad und Übertragungsglied zu groß ist, kann der Kontaktzone zwischen Eingangsrad und Übertragungsglied gezielt Traktionsfluid zugeführt werden. Dies kann beispielsweise durch eine Pumpe erfolgen, durch die das Traktionsfluid in die Kontaktzone mit Druck gespritzt wird.

Anhand der in den Figuren dargestellten Ausführungsbeispiele soll die Erfindung näher erläutert werden. Es zeigen:

Figur 1      ein stufenloses Getriebe in Form eines Kegelringgetriebes;

Figur 2      ein weiteres Kegelringgetriebe mit einem Sensor zur Erfassung einer Drehzahl eines Reibringes; und

Figur 3      einen Ausschnitt des Kegelringgetriebes der Figur 2 mit modifiziertem Reibring und Sensor.

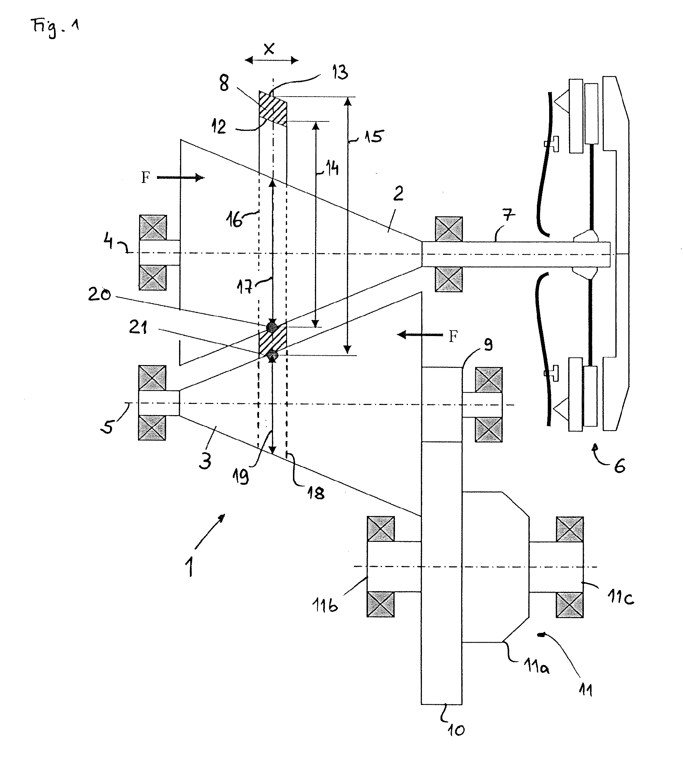

Figur 1 zeigt ein stufenloses Getriebe in Form eine Kegelringgetriebes 1. Das Kegelringgetriebe 1 weist ein erstes Kegelreibrad 2 und ein zweites Kegelreibrad 3 auf. Die Kegelreibräder 2, 3 sind zueinander entgegengesetzt angeordnet, wobei deren Drehachsen parallel verlaufen und einen gewissen Abstand aufweisen. In der Figur 1 sind die Drehachsen der Kegelreibräder 2, 3 durch die gestrichelten Linien 4, 5 dargestellt. Neben dem Kegelringgetriebe 1 zeigt Figur 1 eine Kupplung 6 eines hier nicht weiter dargestellten Kraftfahrzeuges, die über eine Welle 7 drehfest mit dem ersten Kegelreibrad 2 verbunden ist. In einem geschlossenen Zustand überträgt die Kupplung 6 ein Drehmoment über die Welle 7 auf das erste Kegelreibrad 2. Um dieses Drehmoment von dem ersten Kegelreibrad 2 auf das zweite Kegelreibrad 3 zu übertragen, ist ein Reibring 8 vorgesehen, der mit beiden Kegelreibrädern 2, 3 kraftschlüssig in Eingriff steht und das erste Kegelreibrad 2 umgreift. Der Reibring 8 lässt sich über einen Verstellmechanismus, der hier nicht dargestellt ist, parallel zu den Drehachsen 4, 5 der Kegelreibräder 2, 3 axial verschieben. Durch axiales Verschieben bzw. Verstellen des Reibringes 8 lässt sich das Übersetzungsverhältnis des Kegelringgetriebes 1 verstellen.

Das auf das zweite Kegelreibrad 3 übertragene Drehmoment wird über ein Zahnradpaar, bestehend aus einem Zahnrad 9 und einem mit diesem Zahnrad 9 kämmenden Ringzahnrad 10, zu einer Abtriebseinheit 11 geleitet, bestehend aus Differential 11a und Achsen 11 b, 11 c. Das Differential 11a verteilt das Drehmoment auf die Achsen 11 b, 11 c. Entsprechend des Drehmomentflusses kann bei dem in Figur 1 dargestellten Kegelringgetriebe das erste Kegelreibrad 2 als Eingangsrad, das zweite Kegelreibrad 3 als Ausgangsrad bezeichnet werden.

Entlang der Drehachsen 4, 5 lassen sich die Kegelreibräder 2, 3 relativ zueinander verschieben. Durch diese relative Verschiebbarkeit lässt sich eine axiale Kraft F über einen hier nicht weiter dargestellten Aktuator einstellen, mit der die Kegelreibräder 2, 3 in axialer Richtung gegen den Reibring 8 drücken.

Der Reibring 8 weist eine Ringinnenfläche 12 und eine Ringaußenfläche 13 auf. Der Ringinnenfläche 12 kann dabei ein mittlerer Innendurchmesser 14 des Reibringes 8 zugeordnet werden. Entsprechend kann der Ringaußenfläche 13 ein mittlerer Außendurchmesser 15 des Reibringes 8 zugeordnet werden.

Wie der Figur 1 zu entnehmen ist, wirkt die Ringinnenfläche 12 des Reibringes 8 mit dem ersten Kegelreibrad oder Eingangsrad 2 zusammen. Die Ringaußenfläche 13 des Reibringes 8 wirkt mit dem zweiten Kegelreibrad oder Ausgangsrad 3 zusammen. In Abhängigkeit der axialen Lage x tritt die Ringinnenfläche 12 mit einem Umfangssegment 16 des Eingangsrad 2 in Kontakt, das gestrichelt dargestellt ist und einen mittleren Durchmesser 17 definiert. Da das Eingangsrad 2 an diesem Durchmesser 17 mit dem Reibring 8 zusammenwirkt, kann der Durchmesser 17 auch als wirksamer Durchmesser des Eingangsrad 2 bezeichnet werden. In analoger Weise ergibt sich beim Ausgangsrad 3 ein ebenfalls gestrichelt dargestelltes Umfangssegment 18, an dem der Reibring 8 mit seiner Ringaußenfläche 13 anliegt. Das Umfangssegment 18 weist einen (wirksamen) Durchmesser 19 auf.

Wenn die Drehzahlen des Eingangsrads 2, des Ausgangsrads 3 und des Reibrings 8 erfasst werden, können unter Berücksichtigung der geometrischen Zusammenhänge des Kegelringgetriebes 1 gemäß der Gleichungen 6 und 7 mit Hilfe der Gleichungen 2, 3 ein Schlupf zwischen Eingangsrad 2 und Reibring 8 und ein Schlupf zwischen Reibring 8 und Ausgangsrad 3 berechnet werden. Neben den Drehzahlen müssen dabei die wirksamen Durchmesser 17, 19 der Kegelreibräder 2, 3 sowie der Innendurchmesser 14 und der Außendurchmesser 15 des Reibrings 8 bekannt sein.

An einer Kontaktzone 20 wird ein Drehmoment vom Eingangsrad 2 auf den Reibring 8 kraftschlüssig übertragen. Um den dabei auftretenden Schlupf gezielt zu beeinflussen, kann die Menge des Traktionsfluids in der Kontaktzone variiert werden.

Analoges gilt für eine Kontaktzone 21 zwischen Reibring 8 und Ausgangsrad 3. Auch diese Kontaktzone 21 kann, ggf. unabhängig von der Menge des Traktionsfluids für Kontaktzone 20, bedarfsgerecht mit Traktionsfluid versorgt werden.

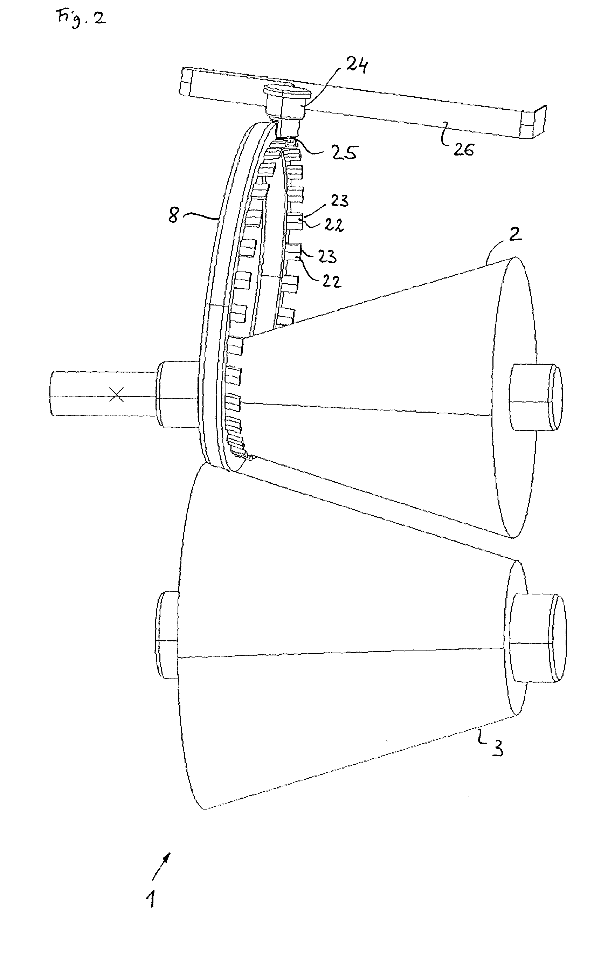

Figur 2 zeigt ein weiteres Kegelringgetriebe, das ebenfalls mit 1 bezeichnet wird. Gleiche oder ähnliche Bauteile zu Bauteilen in dem Ausführungsbeispiel der Figur 1 werden mit gleichen Bezugszeichen versehen.

Der Reibring 8 umfasst eine Vielzahl von Stegen 22, die sich in axialer Richtung erstrecken und ein freien Ende 23 aufweisen. Diese Stege 22 laufen, wenn sich der Reibring um seine Drehachse dreht, an einem zum Reibring ortsfest angeordneten Sensor 24 vorbei, wobei eine Erfassungsfläche 25 des Sensors radial zum Inneren des Reibrings 8 zeigt. Beim Vorbeilaufen erzeugen die Stege Impulse oder eine Triggerung, mittels derer die Drehzahl des Reibrings 8 ermittelt werden kann. Über eine Leitung 26, hier in Form einer sogenannten ,,Flexfolie", erfolgt eine Spannungsversorgung des Sensors 24 und ein Transport der erfassten Signale.

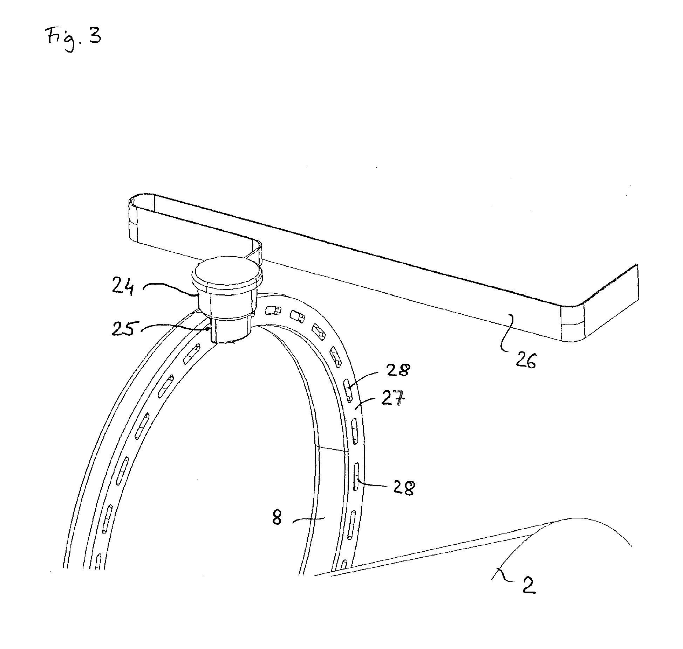

Figur 3 zeigt Teile eines weiteren Ausführungsbeispiels für das Kegelringgetriebe. Zu erkennen ist ein modifizierter Reibring 8, der an einer axialen Seitenwand 27 eine Vielzahl von Taschen 28 aufweist. Diese Taschen 28 laufen bei Drehung des Reibrings 8 an dem Sensor 24 vorbei, wobei hier dessen Erfassungsfläche 25 in axialer Richtung zeigt. Wie auch bei dem Ausführungsbeispiel mit den Stegen 22 erfolgt durch das Zusammenspiel von vorbeilaufenden Taschen 28 und Sensor 24 eine Triggerung zur Ermittlung der Drehgeschwindigkeit des Reibrings 8.

Bezugszeichenliste

| | |
|---|---|
| 1 | Kegelringgetriebe |
| 2 | Erstes Kegelreibrad |
| 3 | Zweites Kegelreibrad |
| 4 | Drehachse |
| 5 | Drehachse |
| 6 | Kupplung |
| 7 | Welle |
| 8 | Reibring |
| 9 | Zahnrad |
| 10 | Ringzahnrad |
| 11 | Abtriebseinheit |
| 12 | Ringinnenfläche |
| 13 | Ringaußenfläche |
| 14 | Innendurchmesser |
| 15 | Außendurchmesser |
| 16 | Umfangssegment |
| 17 | Durchmesser |
| 18 | Umfangssegment |
| 19 | Durchmesser |
| 20 | Kontaktzone |
| 21 | Kontaktzone |
| 22 | Steg |
| 23 | Ende |
| 24 | Sensor |
| 25 | Erfassungsfläche |
| 26 | Leitung |
| 27 | Seitenwand |

28    Tasche

**Patentansprüche**

**1.** Verfahren zum Steuern eines stufenlosen Getriebes (1) mit einem Eingangsrad (2), mit einem Ausgangsrad (3) und mit einem Übertragungsglied (8), das sowohl mit dem Eingangsrad (2) als auch mit dem Ausgangsrad (3) kraftschlüssig in Eingriff steht, wobei eine Übersetzungsverstellung des Getriebes (1) durch eine stufenlose Änderung eines Radius eines Kraftangriffspunktes zwischen Eingangsrad (2) und Übertragungsglied (8) und/oder durch eine stufenlose Änderung eines Radius eines Kraftangriffspunktes zwischen Ausgangsrad (3) und Übertragungsglied (8) erfolgt, **dadurch gekennzeichnet, dass** neben den Drehzahlen von Eingangsrad (2) und Ausgangsrad (3) eine Drehzahl oder eine Umlaufgeschwindigkeit des Übertragungsglieds (8) ermittelt wird.

**2.** Verfahren nach Anspruch 1, **dadurch gekennzeichnet, dass** der Schlupf zwischen dem Eingangsrad (2) und dem Übertragungsglied (8) und der Schlupf zwischen dem Übertragungsglied (8) und dem Ausgangsrad (2) ermittelt wird.

**3.** Verfahren nach Anspruch 2, **dadurch gekennzeichnet, dass** eine Regelung der Schlüpfe durch Regelung einer Anpresskraft erfolgt, die auf das Übertragungsglied (8) wirkt.

**4.** Verfahren nach einem der Ansprüche 1 bis 3, **dadurch gekennzeichnet, dass** eine Zuführung eines Traktionsfluids zu einer Kontaktzone (20) zwischen Eingangsrad (2) und Übertragungsglied (8) und/oder zu einer Kontaktzone (21) zwischen Übertragungsglied (8) und Ausgangsrad (3) geregelt wird.

**5.** Stufenloses Getriebe (1) mit einem Eingangsrad (2), mit einem Ausgangsrad (3) und mit einem Übertragungsglied (8), das sowohl mit dem Eingangsrad (2) als auch mit dem Ausgangsrad (3) kraftschlüssig in Eingriff steht, wobei eine Übersetzungsverstellung durch eine stufenlose Änderung eines Radius eines Kraftangriffspunktes zwischen Eingangsrad (2) und Übertragungsglied (8) und/oder durch eine stufenlose Änderung eines Radius eines Kraftangriffspunktes zwischen Ausgangsrad (3) und Übertragungsglied (8) erfolgt, **dadurch gekennzeichnet, dass** eine Drehzahl oder eine Umlaufgeschwindigkeit des Übertragungsglieds (8) erfassbar ist.

**6.** Getriebe (1) nach Anspruch 5, **dadurch gekennzeichnet, dass** das Eingangsrad und das Ausgangsrad als Kegelreibräder (2, 3) ausgebildet sind, die zueinander entgegengesetzt auf parallelen Wellen angeordnet sind, und dass das Übertragungsglied als Reibring (8) ausgebildet ist, der eines der Kegelreibräder (2) umgreift und in axialer Richtung der Wellen verschiebbar ist.

**7.** Getriebe (1) nach Anspruch 6, **dadurch gekennzeichnet, dass** ein Sensor (24) zur Erfassung der Drehzahl des Reibrings (8) vorzugsweise an einem Verstellmechanismus für den Reibring (8) befestigt ist.

**8.** Getriebe (1) nach Anspruch 7, **dadurch gekennzeichnet, dass** der Reibring (8) wenigstens einen Signalgeber (22, 28) aufweist, der bei Drehung des Reibrings (8) am Sensor (24) vorbeiläuft.

**9.** Getriebe (1) nach Anspruch 8, **dadurch gekennzeichnet, dass** der Signalgeber als ein sich in axialer Richtung erstreckender Steg (22) ausgebildet ist

**10.** Getriebe (1) nach Anspruch 8, **dadurch gekennzeichnet, dass** der Signalgeber als eine Tasche (28) ausgebildet ist, die in einer axialen Seitenwand (27) des Reibrings (8) ausgebildet ist.

**11.** Getriebe (1) nach einem der Ansprüche 6 bis 10, **dadurch gekennzeichnet, dass** eine Kraft in axialer Richtung regelbar ist, mit der der Reibring (8) zwischen den Kegelreibrädern (2, 3) eingespannt ist.

**12.** Getriebe (1) nach einem der Ansprüche 6 bis 11, **dadurch gekennzeichnet, dass** die Kegelreibräder (2, 3) zueinander in axialer Richtung verschiebbar sind.

**13.** Getriebe (1) nach einem der Ansprüche 5 bis 12, **dadurch gekennzeichnet, dass** eine Zuführung eines Traktionsfluids zu einer Kontaktzone (21) zwischen Eingangsrad (2) und Übertragungsglied (8) und/oder zu der Kontaktzone (21) zwischen Übertragungsglied (8) und Ausgangsrad (3) regelbar ist.

Fig. 1

Fig. 2

24

25

26

8

23
22

23
22

2

3

1

Fig. 3

**Europäisches Patentamt**

## EUROPÄISCHER RECHERCHENBERICHT

Nummer der Anmeldung

EP 05 10 9897

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 98/12457 A (ROBERT BOSCH GMBH; BOLZ, MARTIN-PETER) 26. März 1998 (1998-03-26) | 1-3,5, 7-11 | F16H61/664 F16H15/42 |
| Y | * Abbildungen 1-5 * | 4,6,12, 13 | |
| | ----- | | |
| X | PATENT ABSTRACTS OF JAPAN Bd. 012, Nr. 182 (M-702), 27. Mai 1988 (1988-05-27) -& JP 62 292950 A (DAIHATSU MOTOR CO LTD), 19. Dezember 1987 (1987-12-19) | 1-3,5, 7-11 | |
| Y | * Zusammenfassung; Abbildungen 1-5 * | 4,6,12, 13 | |
| | ----- | | |
| X | PATENT ABSTRACTS OF JAPAN Bd. 016, Nr. 245 (M-1260), 4. Juni 1992 (1992-06-04) -& JP 04 054363 A (FUJI HEAVY IND LTD), 21. Februar 1992 (1992-02-21) | 1-3,5, 7-9 | |
| Y | * Zusammenfassung * | 4,6, 11-13 | RECHERCHIERTE SACHGEBIETE (IPC) |
| | ----- | | |
| X | NL 8 103 554 A (VARICAR B.V. TE HELMOND) 16. Februar 1983 (1983-02-16) | 1-3,5,7, 8,10,11 | F16H |
| Y | * Abbildung 1a * | 4,6,12, 13 | |
| | ----- | | |
| X | DE 44 40 278 C1 (TEMIC TELEFUNKEN MICROELECTRONIC GMBH, 74072 HEILBRONN, DE; VOLKSWAGEN) 30. November 1995 (1995-11-30) | 1-3,5, 7-9,11 | |
| Y | * das ganze Dokument * | 4,6, 11-13 | |
| | ----- | | |
| Y | WO 2004/113766 A (ROHS, ULRICH; DRAEGER, CHRISTOPH; BRANDWITTE, WERNER) 29. Dezember 2004 (2004-12-29) * Absatz [0026]; Ansprüche 3,8,9,12,22,28 * | 4,6, 11-13 | |
| | ----- | | |

Der vorliegende Recherchenbericht wurde für alle Patentansprüche erstellt

| Recherchenort | Abschlußdatum der Recherche | Prüfer |
|---|---|---|
| München | 20. Februar 2006 | Szodfridt, T |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 10 9897

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2006

| Im Recherchenbericht angeführtes Patentdokument | | Datum der Veröffentlichung | Mitglied(er) der Patentfamilie | | Datum der Veröffentlichung |
|---|---|---|---|---|---|
| WO 9812457 | A | 26-03-1998 | DE | 19638277 A1 | 26-03-1998 |
| | | | EP | 0858564 A1 | 19-08-1998 |
| | | | JP | 2000500850 T | 25-01-2000 |
| | | | US | 6146294 A | 14-11-2000 |
| JP 62292950 | A | 19-12-1987 | KEINE | | |
| JP 04054363 | A | 21-02-1992 | JP | 2821536 B2 | 05-11-1998 |
| NL 8103554 | A | 16-02-1983 | KEINE | | |
| DE 4440278 | C1 | 30-11-1995 | EP | 0712003 A2 | 15-05-1996 |
| | | | JP | 8226929 A | 03-09-1996 |
| | | | US | 5643116 A | 01-07-1997 |
| WO 2004113766 | A | 29-12-2004 | KEINE | | |

EPO FORM P0461

Für nähere Einzelheiten zu diesem Anhang : siehe Amtsblatt des Europäischen Patentamts, Nr.12/82